# EUROPÄISCHE PATENTANMELDUNG

(11) **EP 4 707 625 A1**
(43) Veröffentlichungstag der Anmeldung: **11.03.2026**
(21) Anmeldenummer: 25200979.0
(22) Anmeldetag: 09.09.2025
(51) Int. Cl.: F16C 29/04, F16C 29/06, F16C 33/38, F16C 33/46

(54) **LINEARFÜHRUNG**

(30) Priorität: 10.09.2024 EP 24199597
(71) Anmelder: Schneeberger Holding AG, 4914 Roggwil (CH)
(72) Erfinder: GROLIMUND, Thomas, 4900 Langenthal (CH)
(74) Vertreter: EGLI-EUROPEAN PATENT ATTORNEYS

(57) **Zusammenfassung**

Linearführung (1), umfassend: einen ersten Verschiebekörper (2); einen zweiten Verschiebekörper (3), der relativ zu dem ersten Verschiebekörper (2) entlang einer Linearrichtung (A) linear beweglich ist; zumindest einen ersten Wälzkörpersatz (4a), der zwischen dem ersten (2) und zweiten Verschiebekörper (3) vorgesehen ist und der zumindest einen Wälzkörper (41) aufweist, und über den der erste (2) und zweite Verschiebekörper (3) relativ beweglich sind; und einen Käfig (5), in dem der zumindest eine Wälzkörper (41) in einem Halteabschnitt (52), der in der Linearrichtung (A) mit dem zumindest einen Wälzkörper (41) überlappt, angeordnet ist. Zur Erhöhung der Präzision und Verbesserung des Ansprechverhaltens der Linearführung weist der Käfig (5) zumindest eine unebene Versteifungsstruktur (6) auf, die in dem Halteabschnitt (52) angeordnet ist und zumindest eine Aussparung (62) enthält.

## Beschreibung

### Gebiet der Erfindung

Die vorliegende Erfindung bezieht sich auf eine Linearführung, insbesondere eine Linearführung, bei der zwei Verschiebekörper über dazwischen angeordnete Wälzkörper entlang einer Linearrichtung relativ beweglich sind. Bei der Linearführung kann es sich um eine Zwangsführung handeln.

### Hintergrund der Erfindung

Beispielsweise ist aus der US 5 553 946 A eine Linearführung bekannt, die zwei Verschiebekörper aufweist, die entlang einer Linearrichtung relativ zueinander beweglich sind. Zwischen den Verschiebekörpern ist eine Vielzahl von Wälzkörpern entlang der Linearrichtung vorgesehen. Die Wälzkörper sind in einem Käfig angeordnet. Weiterhin weist der Käfig eine Versteifungsstruktur auf, die als Aufdickung ausgebildet ist.

Im Stand der Technik kann daher die Steifigkeit des Käfigs erhöht werden, und damit die Präzision der Linearführung verbessert werden.

Jedoch erhöht die Versteifungsstruktur das Gewicht des Käfigs, was wiederum das Ansprechverhalten des Käfigs beeinträchtigen kann.

Es ist somit Aufgabe der vorliegenden Erfindung, eine Linearführung mit hoher Präzision und schnellem Ansprechverhalten bereitzustellen.

### Zusammenfassung der Erfindung

Diese Aufgabe wird erfindungsgemäß durch eine Linearführung mit den Merkmalen nach Anspruch 1 gelöst.

Gemäß einem Aspekt wird eine Linearführung vorgesehen, die umfasst: einen ersten Verschiebekörper; einen zweiten Verschiebekörper, der relativ zu dem ersten Verschiebekörper entlang einer Linearrichtung linear beweglich ist; zumindest einen ersten Wälzkörpersatz, der zwischen dem ersten und zweiten Verschiebekörper vorgesehen ist und der zumindest einen Wälzkörper aufweist, und über den der erste und zweite Verschiebekörper relativ beweglich sind; und einen Käfig, in dem der zumindest eine Wälzkörper in einem Halteabschnitt, der in der Linearrichtung mit dem zumindest einen Wälzkörper überlappt, angeordnet ist.

Vom Stand der Technik insbesondere unterscheidend ist die vorliegende Erfindung dadurch gekennzeichnet, dass der Käfig zumindest eine unebene Versteifungsstruktur aufweist, die zumindest abschnittsweise in dem Halteabschnitt angeordnet ist und zumindest eine Aussparung enthält.

Demgemäß ist der Käfig nicht als eine Platte mit einheitlicher Dicke ausgestaltet, sondern ist zumindest abschnittsweise in dem Halteabschnitt von einer ebenen Form abweichend uneben vorgesehen. Dadurch kann der Käfig in dem Halteabschnitt zumindest abschnittsweise versteift werden gegenüber einer ebenen Plattenform. Jedoch kann die unebene Versteifungsstruktur nicht einfach durch eine durchgehende Materialaufdickung im Halteabschnitt erzeugt werden. Vielmehr weist sie eine Aussparung auf. Sie ist also in einem rechteckigen Querschnitt senkrecht zu einer Relativbewegungsebene, entlang der sich die Verschiebekörper relativ bewegen, insbesondere nicht als Vollprofil ausgebildet. Dadurch kann trotz der Versteifung das Gewicht nicht übermäßig erhöht werden. Dies ermöglicht ein schnelleres Ansprechen der Linearführung, wenn eine externe Last eine Linearbewegung induziert.

Unter einer unebenen Versteifungsstruktur ist insbesondere eine von einer reinen Plattenform als Vollprofil abweichende Form zu verstehen. Die Versteifungsstruktur kann gegenüber einer Plattenform also das Flächenträgheitsmoment erhöhen, um die Biegesteifigkeit zu erhöhen. Auch kann eine unebene Versteifungsstruktur eine größere Querschnittsfläche, insbesondere in einem Querschnitt senkrecht zur Linearrichtung, als ein plattenförmiger Vergleichsquerschnitt aufweisen, der die minimale Wandstärke, bevorzugt die maximale Wandstärke, der Versteifungsstruktur als Dicke und eine Breite aufweist, in der die Versteifungsstruktur sich parallel zu einer Relativbewegungsebene erstreckt. Somit kann die Zug- und Drucksteifigkeit (axiale Steifigkeit) erhöht werden.

Andererseits kann die Aussparung eine Konfiguration meinen, bei der ein Querschnitt, insbesondere ein Querschnitt senkrecht zur Linearrichtung, eine kleinere Querschnittsfläche aufweist als ein plattenförmiger Vergleichsquerschnitt, der die maximale Abmessung der Versteifungsstruktur senkrecht zur Relativbewegungsebene als Dicke aufweist und die Breite aufweist, über die sich die maximale Abmessung parallel zur Relativbewegungsebene erstreckt, insbesondere eine Richtung senkrecht zur Linearrichtung parallel zur Relativbewegungsebene.

Auch kann eine Aussparung eine Konfiguration meinen, wobei eine maximale Abmessung der Versteifungsstruktur senkrecht zur Relativbewegungsebene größer ist als eine maximale Wandstärke der Versteifungsstruktur.

Eine Aussparung kann insbesondere durch einen konkaven Abschnitt und/oder eine Vertiefung und/oder ein Loch gebildet sein.

Eine Aussparung kann insbesondere in einer bestimmten Richtung, insbesondere parallel zur Relativbewegungsebene, nochmals insbesondere in einer Richtung senkrecht zur Linearrichtung, und/oder senkrecht zur Relativbewegungsebene zwischen Material der Versteifungsstruktur vorgesehen sein.

Eine Aussparung in diesem Sinne ist insbesondere keine Aussparung, die eine Funktion zur Aufnahme eines Elements aufweist, wie beispielsweise keine Aussparung zur Aufnahme eines Wälzkörpers oder eines Zwangsführungselements.

Die Aussparung kann insbesondere eine Relativbewegungsebene, die durch den Mittelpunkt des Wälzkörpers läuft, berühren, oder diese schneiden. Alternativ oder zusätzlich kann die Aussparung in einer Richtung senkrecht zu besagter Relativbewegungsebene zwischen Relativbewegungsebene und einem Apex eines konvexen Abschnitts und/oder Vorsprungs vorgesehen sein, der zur Ausbildung der unebenen Versteifungsstruktur vorgesehen ist.

Die Relativbewegungsebene meint hier eine Ebene, entlang derer der erste und zweite Verschiebekörper relativ beweglich zueinander sind. Die Relativbewegungsebene enthält die Linearrichtung. Die Relativbewegungsebene steht senkrecht zu einer Anordnungsrichtung des ersten und zweiten Verschiebekörpers, in der sich die Verschiebekörper zugewandt sind, insbesondere zu Basisflächen der Verschiebekörper. Die Relativbewegungsebene kann auch eine Ebene sein, die der Erstreckungsebene der Vielzahl von Wälzkörpern entspricht. Mit anderen Worten kann die Relativbewegungsebene einer Erstreckungsebene der Vielzahl von Aufnahmelöchern zur Aufnahme mindestens eines der Wälzkörper entsprechen, also einer Ebene, die senkrecht zu einer Durchdringungsrichtung zumindest eines Aufnahmelochs (zur Aufnahme mindestens eines der Wälzkörper) steht. Die Relativbewegungsebene kann durch den Mittelpunkt des zumindest einen Wälzkörpers und/oder Aufnahmelochs verlaufen.

Vorzugsweise weist die Versteifungsstruktur eine im Wesentlichen einheitliche Wandstärke auf.

Somit kann die Versteifungsstruktur einfach ausgebildet werden. Es ist somit nicht nötig ein Material des Käfigs aufzudicken.

Gemäß einem weiteren Aspekt kann die Versteifungsstruktur zumindest abschnittsweise zumindest einen konkaven Abschnitt und/oder zumindest eine Vertiefung aufweisen.

Somit kann die Aussparung von einer Oberfläche des Käfigs vorgesehen werden. Dadurch kann die Fertigung vereinfacht werden.

Vorzugsweise ist jeweils zumindest ein konkaver Abschnitt und/oder zumindest eine Vertiefung auf einer Seite des Käfigs, die dem ersten Verschiebekörper zugewandt ist, und einer Seite des Käfigs, die dem zweiten Verschiebekörper zugewandt ist, vorgesehen, vorzugsweise zu beiden Seiten besagter Relativbewegungsebene.

Dadurch kann das Gewicht des Käfigs zuverlässig reduziert werden. Gleichzeitig kann eine gewisse Symmetrie, insbesondere Punktsymmetrie, geschaffen werden.

Auch kann die Versteifungsstruktur zumindest abschnittsweise einen konvexen Abschnitt und/oder zumindest einen Vorsprung aufweisen.

Somit kann zuverlässig das Flächenträgheitsmoment erhöht werden. Auch diese Ausgestaltung kann die Herstellung erleichtern.

Vorzugsweise ist jeweils zumindest ein konvexer Abschnitt und/oder zumindest ein Vorsprung auf einer Seite des Käfigs, die dem ersten Verschiebekörper zugewandt ist, und auf einer Seite des Käfigs, die dem zweiten Verschiebekörper zugewandt ist, vorgesehen, vorzugsweise zu beiden Seiten besagter Relativbewegungsebene.

Somit kann das Flächenträgheitsmoment beidseitig erhöht werden, und eine gewisse Symmetrie, insbesondere Punktsymmetrie, geschaffen werden.

Weiterhin kann zumindest ein konkaver Abschnitt und/oder zumindest eine Vertiefung auf einer Seite des Käfigs, die dem ersten Verschiebekörper zugewandt ist, und zumindest ein konvexer Abschnitt und/oder zumindest ein Vorsprung auf einer Seite des Käfigs, die dem zweiten Verschiebekörper zugewandt ist, vorgesehen sein.

Dadurch können der konkave Abschnitt und/oder die Vertiefung sowie der konvexe Abschnitt und/oder der Vorsprung auf unterschiedlichen Seiten des Käfigs vorgesehen werden, was eine Fertigung erleichtert. Insbesondere kann die Fertigung durch Umformen erfolgen. Das Vorsehen auf unterschiedlichen Seiten kann insbesondere derart sein, dass die Versteifungsstruktur eine im Wesentlichen einheitliche Wandstärke aufweist.

Eine Vielzahl von konvexen Abschnitten/Vorsprüngen und/oder eine Vielzahl von konkaven Abschnitten/Vertiefungen können in einer bestimmten Richtung voneinander, vorzugsweise regelmäßig, beabstandet vorgesehen sein. Die bestimmte Richtung kann eine Richtung parallel zur Relativbewegungsebene, insbesondere senkrecht zur Linearrichtung sein. Dies kann insbesondere auf einer Seite des Käfigs erfolgen. Nochmals sei darauf hingewiesen, dass aufgrund der Definition der Relativbewegungsebene, die Richtung parallel zur Relativbewegungsebene die Breitenrichtung des Käfigs sein kann, die senkrecht zur Anordnungsrichtung/Durchdringungsrichtung und der Linearrichtung ist.

Vorzugsweise kann der konvexe Abschnitt/Vorsprung in einer Richtung senkrecht zur Linearrichtung, vorzugsweise senkrecht zur Relativbewegungsebene, zumindest teilweise, vorzugsweise vollständig, überlappend mit dem konkaven Abschnitt/Vertiefung ausgebildet sein.

Somit kann die Versteifungsstruktur durch gleichzeitiges Ausbilden von konvexen und konkaven Abschnitten bzw. Vorsprüngen und Vertiefungen besonders effizient hergestellt werden. Mit anderen Worten kann der Käfig so ausgestaltet sein, dass durch Ausbilden des konkaven Abschnitts/Vertiefung auch der konvexe Abschnitt/Vorsprung ausgebildet ist. Insbesondere kann der konvexe Abschnitt/Vorsprung auf einer dem ersten Verschiebekörper zugewandten Seite und der konkave Abschnitt/Vertiefung auf einer dem zweiten Verschiebekörper zugewandten Seite vorgesehen sein. Auch dabei kann der Käfig eine im Wesentlichen einheitliche Wandstärke aufweisen. Die Richtung senkrecht zur Relativbewegungsebene kann die Anordnungsrichtung/Durchdringungsrichtung sein.

Mit anderen Worten können in der Richtung parallel zur Relativbewegungsebene (der Breitenrichtung des Käfigs) ein konkaver Abschnitt/Vertiefung auf der einen Seite und ein konvexer Abschnitt/Vorsprung auf der anderen Seite an derselben Position vorgesehen sein.

Insbesondere kann der Apex des konvexen Abschnitts und/oder des Vorsprungs auf einer Seite des Käfigs in einer Richtung senkrecht zur Relativbewegungsebene, überlappend mit dem Apex des konkaven Abschnitts und/oder der Vertiefung auf der anderen Seite ausgebildet sein.

Gemäß noch einem weiteren Aspekt kann die Versteifungsstruktur ein entlang einer Haupterstreckungsrichtung extrudiertes Profil aufweisen.

Somit kann die Versteifungsstruktur eine Vorzugsrichtung aufweisen. Mit anderen Worten kann die Versteifungsstruktur anisotrop vorgesehen sein.

Vorzugsweise verläuft die Haupterstreckungsrichtung parallel zur Linearrichtung.

Durch die Wälzkörper können insbesondere Lasten parallel zur Relativbewegungsebene eingebracht werden, wobei eine in Linearrichtung extrudierte Versteifungsstruktur die axiale Steifigkeit des Käfigs erhöhen kann. Ebenso kann die Biegesteifigkeit erhöht werden.

Gemäß noch einem weiteren Aspekt kann die Versteifungsstruktur zumindest abschnittsweise wellenförmig ausgebildet sein.

Somit kann der zumindest eine konvexe und konkave Abschnitt kontinuierlich ausgebildet sein. Dadurch kann die Fertigung erleichtert werden. Eine Vielzahl von Wellenbergen und/oder Wellentälern können, vorzugsweise regelmäßig, voneinander beabstandet sein. Die Wellenform kann insbesondere auf zumindest einer Seite, vorzugsweise auf beiden Seiten des Käfigs, rund ausgebildet sein, also keine scharfen Kanten aufweisen. Dadurch können Spannungsspitzen reduziert werden.

Die Wellenform kann auch das Fließen von Schmiermitteln für die Wälzkörper erleichtern.

Alternativ oder zusätzlich kann die Versteifungsstruktur zumindest abschnittsweise zick-zack-förmig ausgebildet sein.

Auch dadurch können zackenförmige Berge und Täler vorgesehen sein, die die Steifigkeit erhöhen können. Eine solche Form kann einfach hergestellt werden. Zumindest auf einer Seite des Käfigs kann die zick-zack-Form eine scharfe Kante aufweisen. Auch die zick-zack-Form kann das Fließen von Schmiermittel erleichtern.

Gemäß noch einem weiteren Aspekt kann die Linearführung einen zweiten Wälzkörpersatz parallel zum ersten Wälzkörpersatz entlang der Linearrichtung aufweisen, der erste Wälzkörpersatz und der zweite Wälzkörpersatz in dem Käfig angeordnet sein, insbesondere kann der Käfig entlang der Linearrichtung gesehen im Wesentlichen U-förmig ausgebildet sein.

Somit kann ein gemeinsamer, integraler Käfig für die beiden Wälzkörpersätze vorgesehen sein. Bei einer solchen Struktur kann der Käfig relativ groß sein. Deswegen ist eine Erhöhung der Steifigkeit bei niedrigem Gewicht besonders vorteilhaft. Weiterhin kann so eine hohe Präzision für beide Wälzkörpersätze erzielt werden.

Die Wälzkörpersätze können auf gegenüberliegenden Seiten des ersten Verschiebekörpers gelegen sein, insbesondere überlappend in einer Richtung senkrecht zur Relativbewegungsebene.

Vorzugsweise ist die Versteifungsstruktur zumindest zwischen dem ersten Wälzkörpersatz und dem zweiten Wälzkörpersatz, insbesondere in zumindest einem von zwei Schenkeln der U-Form, angeordnet.

Somit kann nicht nur der Halteabschnitt versteift werden, sondern auch der Bereich zwischen den Wälzkörpersätzen. Damit kann die Präzision weiter erhöht werden. Insbesondere kann eine hohe Formtreue der U-Form erzielt werden.

Gemäß noch einem weiteren Aspekt kann die Versteifungsstruktur zumindest abschnittsweise durch Umformen, insbesondere Biegen und/oder Tiefziehen, ausgebildet werden.

Damit kann die Versteifungsstruktur durch Umformen erzielt werden. Es ist somit möglich, die Versteifungsstruktur kostengünstig herzustellen.

Gemäß noch einem weiteren Aspekt kann der Käfig Metall, insbesondere Stahl umfassen, vorzugsweise davon gebildet werden.

Dies ermöglicht eine hohe Materialsteifigkeit zusätzlich zu der geometrischen Versteifung. Weiterhin kann die Versteifungsstruktur kostengünstig ausgebildet werden. Bei dem Stahl kann es sich um Edelstahl halten. Jedoch sind auch andere Stahlarten denkbar.

Gemäß noch einem weiteren Aspekt kann die Versteifungsstruktur monolithisch ausgebildet sein.

Dadurch kann die Teilezahl reduziert werden. Insbesondere kann die Versteifungsstruktur monolithisch mit dem ganzen Käfig ausgebildet sein.

Gemäß noch einem weiteren Aspekt kann der erste Verschiebekörper und/oder der zweite Verschiebekörper eine Nut aufweisen, in der zumindest der erste Wälzkörpersatz vorgesehen ist.

Somit kann eine genaue Führung der Wälzkörper ermöglicht werden. Weiterhin kann der Käfig relativ nahe an die Verschiebekörper gebracht werden, was eine hohe Präzision erforderlich macht.

Die vorliegende Erfindung wird nun unter Bezugnahme auf die beigefügten Zeichnungen im Detail erläutert.

### Kurzbeschreibung der Zeichnungen

Fig. 1 zeigt einen Querschnitt durch eine Linearführung.
Fig. 2 zeigt eine perspektivische Seitenansicht auf die Linearführung, wobei ein Verschiebekörper zur besseren Darstellung weggelassen wird.
Fig. 3A zeigt ein Käfigprofil im Querschnitt, Fig. 3B zeigt ein alternatives Käfigprofil im Querschnitt.
Fig. 4 zeigt eine Seitenansicht auf einen Käfigabschnitt gemäß einer weiteren Modifikation.

### Detaillierte Beschreibung beispielhafter Ausführungsformen

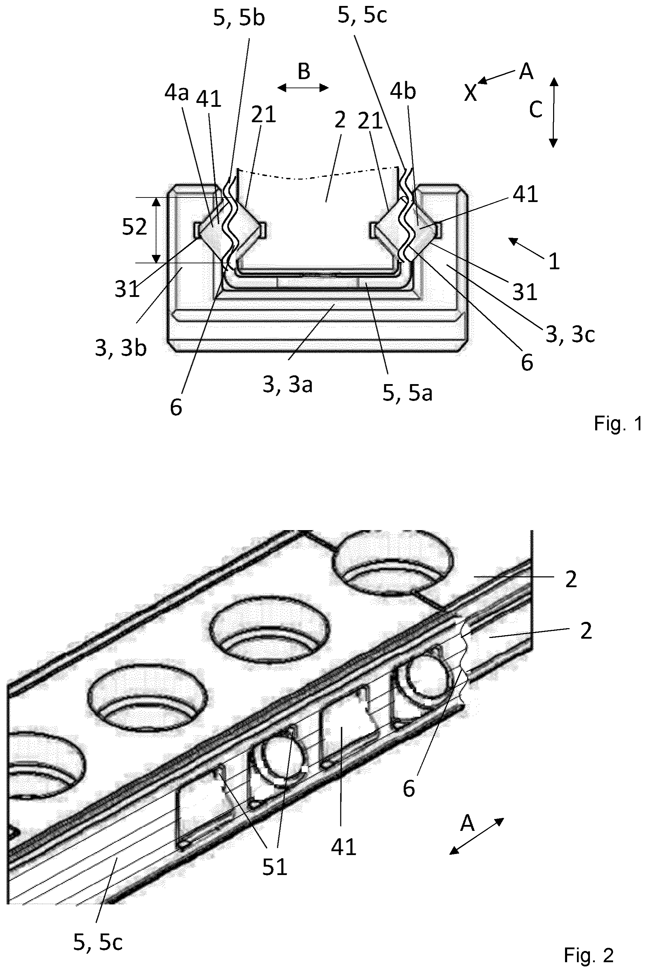

Eine Linearführung 1 ist in Fig. 1 im Querschnitt senkrecht zu einer Linearrichtung A dargestellt. Die Linearführung 1 weist einen ersten Verschiebekörper 2 und einen zweiten Verschiebekörper 3 auf, die entlang der Linearrichtung A relativ zueinander beweglich sind.

Der erste Verschiebekörper 2 kann, wie hier, eine im Wesentlichen blockförmige Gestalt aufweisen, die einen im Wesentlichen rechteckigen Querschnitt aufweist. Besagter rechteckiger Querschnitt erstreckt sich entlang der Linearrichtung A.

Der zweite Verschiebekörper 3 kann, wie in Fig. 1 gezeigt, einen im Wesentlichen U-förmigen Querschnitt aufweisen, der sich ebenfalls in Linearrichtung A erstreckt. Der zweite Verschiebekörper 3 kann also den ersten Verschiebekörper 2 umgreifen. Der zweite Verschiebekörper 3 hat einen Bodenabschnitt 3a, und zwei Schenkel 3b und 3c, die sich an beiden seitlichen Enden des Bodenabschnitts 3a in einem im Wesentlichen rechten Winkel dazu erstrecken.

Im ersten Verschiebekörper 2 sind an gegenüberliegenden Seiten, also an Seiten, die den Schenkeln 3b und 3c jeweils zugewandt sind, V-förmige Nuten 21 ausgebildet, die sich entlang der Linearrichtung A erstrecken. Die Nuten 21 sind ausgehend von ebenen Basisflächen vertieft. Die Schenkel 3b und 3c des zweiten Verschiebekörpers 3 sind in einer Breitenrichtung B dem ersten Verschiebekörper 2 zugewandt. Die Breitenrichtung B ist eine Richtung, die senkrecht zu einer Relativbewegungsebene verläuft, parallel zu welcher die ersten und zweiten Verschiebekörper relativ zueinander beweglich sind. Mit anderen Worten ist die Breitenrichtung B die Richtung, entlang der sich die Verschiebekörper 2 und 3 zugewandt sind und mit den später beschriebenen Wälzkörpern überlappen. Eine Höhenrichtung C steht senkrecht auf der Linearrichtung A und der Breitenrichtung B.

Der zweite Verschiebekörper 3 weist korrespondierende V-förmige Nuten 31 auf, wobei jeweils eine Nut 31 an einer dem ersten Verschiebekörper 2 zugewandten Seite der Schenkel 3b und 3c vorgesehen ist, insbesondere derart, dass sie spiegelsymmetrisch zur Nut 21 vorgesehen ist. Die Nuten 31 sind jeweils ausgehend von einer ebenen Basisfläche vertieft.

Die Nuten 21 und 31 sind jeweils auf der gleichen Höhe in Höhenrichtung C vorgesehen und überlappen einander in der Breitenrichtung B.

Zwischen dem ersten Verschiebekörper 2 und 3 sind in Breitenrichtung B ein erster Wälzkörpersatz 4a und ein zweiter Wälzkörpersatz 4b vorgesehen.

Der erste Wälzkörpersatz 4a ist in der Nut 21, die dem Schenkel 3b zugewandt ist, und der entsprechenden Nut 31 angeordnet. Der zweite Wälzkörpersatz 4b ist in der Nut 21, die dem Schenkel 3c zugewandt ist, und der entsprechenden Nut 31 vorgesehen. Jeder Wälzkörpersatz 4a und 4b umfasst eine Vielzahl, insbesondere dieselbe Anzahl, von Wälzkörpern 41, die entlang der Linearrichtung A voneinander, vorzugsweise regelmäßig, beabstandet sind, wie in Fig. 2 zu sehen ist. Die Wälzkörper 41 sind entlang einer Anordnungsrichtung (Breitenrichtung B), in der die Verschiebekörper 2 und 3 einander zugewandt sind, zwischen den Verschiebekörpern 2 und 3, insbesondere deren Basisflächen, angeordnet.

Die Wälzkörper 41 können wie hier als Zylinderrollen ausgebildet sein. Im vorliegenden Beispiel, siehe Fig. 2, sind die Achsen der Zylinderrollen abwechselnd um jeweils 90° gedreht. Die Achsen sind jeweils in unterschiedlichen Richtungen bezüglich der Relativbewegungsebene um 45° geneigt.

Der erste und zweite Wälzkörpersatz 4a und 4b sind in einem gemeinsamen Käfig 5 angeordnet.

Der Käfig 5 weist den Wälzkörpern 41 entsprechende Aufnahmelöcher 51 auf, die ebenfalls entlang der Linearrichtung, vorzugsweise regelmäßig beabstandet sind, und in denen jeweils ein Wälzkörper 41 angeordnet ist. Die Aufnahmelöcher 51 sowie die Wälzkörper definieren eine Erstreckungsebene parallel zur Höhenrichtung C und der Linearrichtung A. Die Erstreckungsebene bildet die Relativbewegungsebene. Die Aufnahmelöcher 51 durchdringen den Käfig in Anordnungsrichtung. Mit anderen Worten ist die Anordnungsrichtung parallel zu einer Durchdringungsrichtung und senkrecht zur Relativbewegungsebene.

Der Käfig 5 hat im Querschnitt (Fig. 1) eine im Wesentlichen U-förmige Gestalt. Der Käfig 5 hat einen Bodenabschnitt 5a und zwei Schenkel 5b und 5c, die sich an beiden seitlichen Enden des Bodenabschnitts 5a dazu in einem im Wesentlichen rechten Winkel erstrecken, wobei der Übergang beidseitig abgerundet sein kann.

Der Bodenabschnitt 5a ist im Wesentlichen parallel zum Bodenabschnitt 3a des zweiten Verschiebekörpers 3 vorgesehen. Er ist in Höhenrichtung C zwischen Bodenabschnitt 3a des zweiten Verschiebekörpers 3 und einer Unterseite des ersten Verschiebekörpers 2 angeordnet.

Die Schenkel 5b und 5c sind jeweils in Breitenrichtung B zwischen dem jeweiligen Schenkel 3b und 3c des zweiten Verschiebekörpers 3 und der entsprechend zugewandten Seite des ersten Verschiebekörpers 2 angeordnet. Mit anderen Worten kann der Käfig 5 in einem Zwischenraum zwischen den ersten und zweiten Verschiebekörpern angeordnet sein. Der Käfig 5 befindet sich außerhalb der Nuten 21 und 31.

Der Käfig 5 weist einen Halteabschnitt 52 in jedem Schenkel 5b und 5c auf. Der Halteabschnitt 52 ist ein Bereich, der entlang der Linearrichtung A mit den Wälzkörpern 41 überlappt.

Der Käfig 5 kann symmetrisch bezüglich einer Ebene sein, die durch die Mitte des Bodenabschnitts 5a verläuft und sich parallel zu einer Relativbewegungsebene erstreckt.

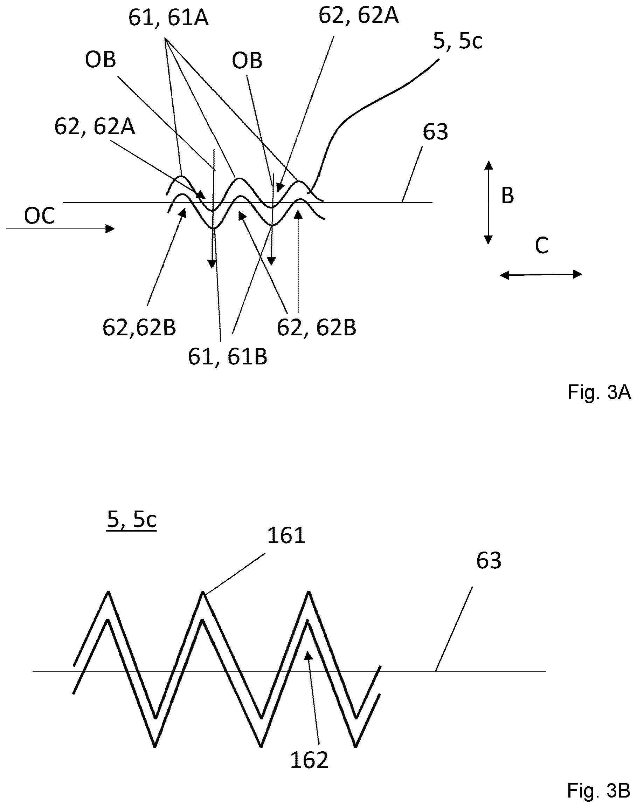

Weiterhin weist der Käfig 5 zumindest abschnittsweise in dem Halteabschnitt 52 eine unebene Versteifungsstruktur 6 auf. Die unebene Versteifungsstruktur 6 ist hier wellenförmig ausgebildet, wie insbesondere in Fig. 3A zu sehen ist.

Die unebene Versteifungsstruktur 6 ist zumindest im Halteabschnitt 52 ausgebildet, bildet insbesondere diesen. Die unebene Versteifungsstruktur 6 kann sich aber wie hier auch über jeweils den gesamten Schenkel 5b und 5c des Käfigs 5 erstrecken. Auch wenn nicht dargestellt, kann sich die Versteifungsstruktur 6 über den gesamten Käfig 5, also auch über den Bodenabschnitt 5a erstrecken. Die Versteifungsstruktur 6 kann somit auch zwischen den Wälzkörpersätzen 4a und 4b vorgesehen sein.

Die unebene Versteifungsstruktur 6 kann wie hier als Profil ausgebildet sein, das sich entlang einer Haupterstreckungsrichtung, hier die Linearrichtung A, erstreckt. Sie erstreckt sich vorzugsweise über die gesamte Erstreckung des Käfigs 5 in der Linearrichtung, zumindest aber über die Hälfte, bevorzugt 80 % davon.

Im Querschnitt kann das Profil, wie in Fig. 3A gezeigt, ausgebildet sein. Die Versteifungsstruktur 6 kann insbesondere zumindest einen konvexen Abschnitt 61 aufweisen, vorzugsweise eine Vielzahl davon. Der zumindest eine konvexe Abschnitt 61 kann im Halteabschnitt 52 angeordnet sein. Der zumindest eine konvexe Abschnitt 61 kann wie hier als Wellenberg ausgebildet sein.

Weiterhin weist die unebene Versteifungsstruktur 6 zumindest eine Aussparung, vorzugsweise eine Vielzahl davon, auf. Die zumindest eine Aussparung kann wie hier von einem konkaven Abschnitt 62, insbesondere Wellental, ausgebildet werden. Auch befindet sich zwischen auf derselben Seite (beispielsweise auf der dem ersten Verschiebekörper zugewandten Seite) liegenden benachbarten Wellenbergen entlang der Höhenrichtung C eine Aussparung.

Wenn die konvexen Abschnitte in dieser Beschreibung nicht unterschieden werden, werden sie allgemein mit 61 bezeichnet. Wenn die konkaven Abschnitte in dieser Beschreibung nicht unterschieden werden, werden sie allgemein mit 62 bezeichnet.

Zumindest eine Aussparung und zumindest ein konvexer Abschnitt 61, vorzugsweise jeweils eine Vielzahl, beispielsweise zwei oder drei davon, können wie hier im Halteabschnitt 52 vorgesehen sein. Die unebene Versteifungsstruktur 6, also konvexe und konkave Abschnitte, können aber, insbesondere kontinuierlich, an die unebene Versteifungsstruktur 6 im Halteabschnitt 52 anschließen.

Beim wellenförmigen Profil gehen konvexe und konkave Abschnitte kontinuierlich ineinander über, wie in Fig. 3A zu sehen ist. Der Wechsel erfolgt an der Relativbewegungsebene 63. Die Aussparung berührt also die Relativbewegungsebene. Die Aussparung (konkaver Abschnitt 62) ist zwischen Relativbewegungsebene 63 und Apex des konvexen Abschnitts 61 in der Breitenrichtung B vorgesehen. Die Relativbewegungsebene 63 ist gemäß den obigen Ausführungen definiert und kann beispielsweise durch den Mittelpunkt der Wälzkörper 41 und/oder der Aufnahmelöcher 51 verlaufen.

Zur Kenntnis zu nehmen ist, dass die Profile in den Figuren 3A und 3B um 90° gegenüber Fig. 1 gedreht sind.

Auf beiden Seiten des Käfigs 5, also auf der dem ersten Verschiebekörper 2 zugewandten Seite und der dem zweiten Verschiebekörper 3 zugewandten Seite, sind die konvexen Abschnitte 61 und konkaven Abschnitte 62 entlang der Höhenrichtung C (Breitenrichtung des Käfigs 5) auf jeweils einer Seite (der dem ersten Verschiebekörper zugewandten Seite und der dem zweiten Verschiebekörper zugewandten Seite) wechselweise vorgesehen. Die konvexen Abschnitte 61 und die konkaven Abschnitte 62 überlappen jeweils einander in der Höhenrichtung C.

Zur Unterscheidung der beiden Seiten des Käfigs werden die Abschnitte auf der einen Seite in Fig. 3A mit dem Index "A" bezeichnet, während die Abschnitte auf der anderen Seite mit dem Index "B" bezeichnet werden.

In Breitenrichtung B (Dickenrichtung des Käfigs 5) überlappen sich jeweils ein konvexer Abschnitt 61A und ein konkaver Abschnitt 62B, wie durch den Pfeil OB angedeutet. Die Überlappung erfolgt insbesondere so vollständig, dass eine im Wesentlichen einheitliche Wandstärke resultiert. Insbesondere überlappen sich die jeweiligen Apizes. Die konvexen Abschnitte 61A und 61B sind in Höhenrichtung C jeweils beabstandet bzw. versetzt voneinander (überlappen nicht in Breitenrichtung B). Die konkaven Abschnitte 62A und 62B sind jeweils in Höhenrichtung C beabstandet bzw. versetzt voneinander (überlappen nicht in Breitenrichtung B). Mit Verweis auf Fig. 3A sei nochmals erläutert, dass also ein konvexer Abschnitt 61A auf einer Seite und ein konkaver Abschnitt 62B auf der anderen Seite im Querschnitt in der Richtung parallel zur Relativbewegungsebene (Höhenrichtung C, Richtung senkrecht zur Anordnungsrichtung) im Wesentlichen an derselben Position angeordnet sind. Ebenso sind ein konvexer Abschnitt 61B auf der anderen Seite und ein konkaver Abschnitt 62A auf der einen Seite in der Richtung parallel zur Relativbewegungsebene (Höhenrichtung C) im Wesentlichen an derselben Position angeordnet.

Wie bereits oben erwähnt, überlappen sich ein konvexer Abschnitt 61A auf einer Seite und ein konkaver Abschnitt 62B auf der anderen Seite in der Höhenrichtung C (Breitenrichtung des Käfigs), wie durch den Pfeil OC angedeutet. Mit anderen Worten umschließt ein konvexer Abschnitt 61A auf der einen Seite den konkaven Abschnitt 62B auf der anderen Seite, in der Höhenrichtung C gesehen.

Weiterhin überlappen sich die Vielzahl von konvexen Abschnitten 61A/61B, die jeweils auf einer Seite vorgesehen sind, entlang der Höhenrichtung. Insbesondere sind die Apizes bei Projektion entlang der Höhenrichtung C deckungsgleich. Weiterhin überlappen sich die Vielzahl von konkaven Abschnitten 62A/62B, die auf einer Seite vorgesehen sind, entlang der Höhenrichtung C. Insbesondere sind die Apizes bei Projektion entlang der Höhenrichtung C deckungsgleich.

Die konvexen Abschnitte 61A auf der einen Seite und die konkaven Abschnitte 62B auf der anderen Seite, sowie die konvexen Abschnitte 61B und die konkaven Abschnitte 62A können durch Umformen, beispielsweise durch Biegen oder Tiefziehen, hergestellt sein. Das gilt auch für Vorsprünge und Vertiefungen.

Eine Relativbewegungsebene, die durch die Mittelpunkte der Wälzkörper 41 verläuft, sei mit 63 bezeichnet. Die konvexen Abschnitte 61 und konkaven Abschnitte 62 sind jeweils zu beiden Seiten der Relativbewegungsebene 63 ausgebildet. Insbesondere sind die konvexen Abschnitte 61A auf einer Seite der Relativbewegungsebene 63 vorgesehen, und die konvexen Abschnitte 61B auf der anderen. Die konkaven Abschnitte 62A sind auf der anderen Seite der Relativbewegungsebene 63 vorgesehen, während die konkaven Abschnitte 62B auf der einen Seite vorgesehen sind.

Mit anderen Worten geht auf einer Seite des Käfigs 5 der konvexe Abschnitt 61A an der Relativbewegungsebene 63 in den konkaven Abschnitt 62A über und andersherum (Wendepunkt). Das kann auch für einen Vorsprung und eine Vertiefung gelten.

Die Apizes der konvexen Abschnitte 61 und der konkaven Abschnitte 62 können wie hier gleichmäßig entlang der Höhenrichtung C (Breitenrichtung des Käfigs 5) beabstandet sein. Auch können die Apizes jeweils denselben Abstand von der Relativbewegungsebene 63 haben.

Die Apizes der konvexen Abschnitte 61 sind vorzugsweise von der Relativbewegungsebene 63 um mindestens die Hälfte der maximalen Breite (in Breitenrichtung des Käfigs) des konvexen Abschnitts 61 beabstandet. Vorzugsweise hat der konvexe Abschnitt 61 mindestens die Höhe (Abstand des Apex), die der maximalen Breite entspricht. Auch kann die Höhe mindestens einem Viertel, vorzugsweise mindestens der Hälfte der Breite des Halteabschnitts 52 (in Breitenrichtung des Käfigs 5) entsprechen.

Der konkave Abschnitt 62 (Apex davon) kann einen Abstand von der Relativbewegungsebene aufweisen, der um eine Wandstärke der Versteifungsstruktur gegenüber dem Abstand des konvexen Abschnitts 61 reduziert ist. Die Apizes der konkaven Abschnitte 62 sind vorzugsweise von der Relativbewegungsebene 63 um mindestens die Hälfte der maximalen Breite (in Breitenrichtung des Käfigs) des konkaven Abschnitts 62 beabstandet. Der konkave Abschnitt 62 kann von der Relativbewegungsebene um mindestens die Hälfte des Abstands des konvexen Abschnitts beabstandet sein, vorzugsweise um mindestens 80%.

Zumindest ein konvexer Abschnitt 61 kann wie hier jeweils auf beiden Seiten der Relativbewegungsebene 63 vorgesehen sein, insbesondere im Halteabschnitt 52. Selbiges gilt für den konkaven Abschnitt 62, der auch beidseitig der Relativbewegungsebene vorgesehen sein kann.

Die unebene Versteifungsstruktur 6 kann wie hier eine im Wesentlichen einheitliche Wandstärke aufweisen. Durch Vorsehen eines konvexen Abschnitts 61A auf einer Seite des Käfigs und des konkaven Abschnitts 62B auf der anderen Seite kann die einheitliche Wandstärke sichergestellt werden.

Die unebene Versteifungsstruktur 6 ist zwischen zumindest zwei, vorzugsweise alle, von den Aufnahmelöchern 51 vorgesehen. Sie kann sich in Linearrichtung A jeweils bis zum Rand der Aufnahmelöcher 51 (also dem Rand in einer Querrichtung zur Linearrichtung A) erstrecken oder in einem geringen Abstand davon, beispielsweise einem Drittel, vorzugsweise einem Viertel von der Abmessung eines Aufnahmelochs 51 in Linearrichtung, enden. Auch kann sie sich über zumindest die Hälfte, vorzugsweise 75%, der Länge eines Zwischenraums in Linearrichtung A zwischen benachbarten Aufnahmelöchern 51 erstrecken.

Die unebene Versteifungsstruktur kann den gesamten Rand der Aufnahmelöcher 51 bilden. So kann auch der in Linearrichtung A verlaufende Rand durch die unebene Versteifungsstruktur 6 gebildet werden.

Funktionen und Effekte der Erfindung werden nun beschrieben.

Der erste Verschiebekörper 2 und der zweite Verschiebekörper können bei Einwirken einer externen Last axial, also entlang der Linearrichtung A, verschoben werden. Dabei können die Wälzkörper 41 eine Wälzbewegung in den Nuten 21 und 31 durchführen. Der Käfig 5 kann dabei die Wälzkörper 41 stützen.

Durch die konvexen Abschnitte 61 der unebenen Versteifungsstruktur 6 kann eine Versteifung des Käfigs 5 erfolgen. Somit kann eine exzessive Verformung des Käfigs 5 unterbunden werden. Damit kann eine hohe Präzision der Linearführung sichergestellt werden.

Die Versteifung kann insbesondere auf der Erhöhung des Flächenträgheitsmoments und/oder der Querschnittsfläche gegenüber einem rechteckigen Vergleichsquerschnitt beruhen. Wie hier, kann die Querschnittsfläche im gesamten Halteabschnitt 52 gegenüber einem rechteckigen Vergleichsquerschnitt erhöht sein, wobei der Vergleichsquerschnitt über den Halteabschnitt 52 (in Breitenrichtung des Käfigs, hier in Höhenrichtung C) mit derselben Wandstärke (Dicke, hier in Breitenrichtung B) wie die der unebenen Versteifungsstruktur 6 ausgebildet ist.

Dadurch, dass die Versteifungsstruktur die Aussparung 62 aufweist, kann jedoch eine übermäßige Gewichtszunahme unterbunden werden. Die Aussparung kann wie hier bewirken, dass die Querschnittsfläche im Halteabschnitt 52 geringer ist als ein rechteckiger Vergleichsquerschnitt als Vollprofil, der in Breitenrichtung des Käfigs 5 (Höhenrichtung C) die Breite des Halteabschnitts 52 (oder eine Breite zwischen zwei benachbarten Apizes auf beiden Seiten des Käfigs 5) aufweist, und der als Dicke (Breitenrichtung B) die maximale Abmessung der unebenen Versteifungsstruktur 6 senkrecht zur Relativbewegungsebene 63 aufweist. Die maximale Abmessung senkrecht zur Relativbewegungsebene wird durch den Abstand der jeweiligen Apizes auf beiden Seiten des Käfigs 5/der Relativbewegungsebene 63 definiert.

Die unebene Versteifungsstruktur 6 ist so ausgebildet, dass ein konvexer Abschnitt 61 mit einem konkaven Abschnitt 62 in einer Richtung senkrecht zur Relativbewegungsebene 63, also in Anordnungsrichtung, überlappt. Somit kann der konvexe Abschnitt 61 besonders einfach durch gleichzeitiges Ausbilden des konkaven Abschnitts 62 ausgebildet werden. Gleichzeitig kann eine einheitliche Wandstärke vorgesehen werden.

Die Wellenform kann eine Sinusform haben. Dies kann die Fertigung erleichtern.

Die Flanken der konvexen 61 und/oder konkaven Abschnitte 62 können mit der Relativbewegungsebene (am Schnittpunkt mit der Relativbewegungsebene) einen Winkel von mindestens 60°, vorzugsweise 80°, nochmals bevorzugt von 90°, bilden. Somit kann das Flächenträgheitsmoment besonders einfach erhöht werden. Auch kann eine große Fläche zur Anbindung der Wälzkörper 41 vorgesehen werden.

Die unebene Versteifungsstruktur 6 kann bezüglich einer Mittelebene des Halteabschnitts 52, die senkrecht zur Relativbewegungsebene 63 durch einen Mittelpunkt der Wälzkörper 41 und/oder Aufnahmelöcher 51 verläuft, symmetrisch ausgebildet sein. Beispielsweise kann die Mittelebene einen konvexen Abschnitt oder konkaven Abschnitt mittig teilen. Somit kann eine gleichförmige Verformung erzielt werden.

Es ist vorteilhaft, wenn die unebene Versteifungsstruktur 6 durch Biegen hergestellt wird. Somit kann die Fertigung vereinfacht werden.

Die Versteifungsstruktur 6, vorzugsweise der gesamte Käfig 5, kann wie hier monolithisch ausgebildet sein. Somit kann die Fertigung weiter vereinfacht werden.

Die Versteifungsstruktur 6, vorzugsweise der gesamte Käfig 5, kann von Edelstahl gebildet werden.

Die Versteifungsstruktur 6, vorzugsweise der gesamte Käfig, kann als Blechteil ausgeführt sein. Die Wandstärke davon kann maximal 1 mm, vorzugsweise 0.5 mm, nochmals bevorzugt, 0.1 mm betragen.

Abwandlungen werden nun beschrieben.

In Fig. 3B ist statt einem wellenförmigen Profil, ein Profil mit zick-zack-Form gezeigt. Wo die konvexen Abschnitte 61 und konkaven Abschnitte 62 in Fig. 3A rund ausgebildet sind, können hier die konvexen Abschnitte 161 und konkaven Abschnitte 162 mit einer Kante ausgebildet sein. Die weiteren Ausgestaltungen entsprechen denen der Fig. 3 A. Ebenfalls gezeigt ist die Relativbewegungsebene 63.

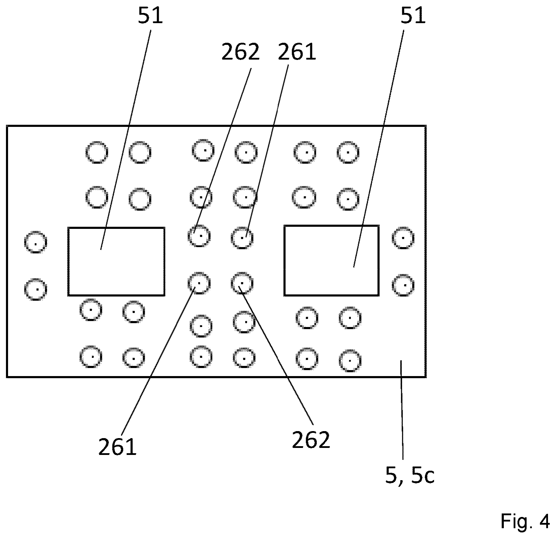

Weiterhin muss die Aussparung nicht durch einen konkaven Abschnitt gebildet werden. Beispielsweise können, wie in Fig. 4 gezeigt, zumindest im Halteabschnitt entlang der Breitenrichtung des Käfigs 5 (Höhenrichtung C in Fig. 1) mehrere Vorsprünge 261 und Vertiefungen 262 in einer ebenen Platte des Schenkels 5c, in dem die Aufnahmelöcher 51 vorgesehen sind, vorgesehen sein. Die Vertiefungen 262 können jeweils mit den Vorsprüngen 261 in der Dickenrichtung (senkrecht zur Zeichnungsebene) überlappen, also der Anordnungsrichtung/Durchdringungsrichtung. Ein Teil der Vorsprünge 261 ist auf der einen Seite des Käfigs 5, beispielsweise der dem ersten Verschiebekörper zugewandten Seite, ausgebildet, ein anderer Teil der Vorsprünge 261 ist auf der anderen Seite ausgebildet.

Es wird auch hier durch die Ausbildung von Vorsprüngen auf der einen Seite und Vertiefungen auf der anderen Seite, eine im Wesentlichen einheitliche Wandstärke vorgesehen. Dies kann durch Umformen erfolgen, wobei durch Ausbilden der Vertiefung gleichzeitig der Vorsprung ausgebildet wird.

Statt einem integralen Käfig, der wie hier durch Verbinden der beiden Schenkel 5b und 5c durch den Bodenabschnitt 5a gebildet wird, können zwei getrennte Käfige vorgesehen sein. Diese können dann jeweils zwischen den Schenkeln 3b und 3c des zweiten Verschiebekörpers und dem ersten Verschiebekörper 2 vorgesehen sein. Die Käfige können dann jeweils besagte unebene Versteifungsstruktur aufweisen.

Weiterhin ist die obige Ausgestaltung nicht auf eine U-Form des Käfigs 5 und/oder des zweiten Verschiebekörpers 3 beschränkt. Beispielsweise kann ein Käfig vorgesehen sein, der sich gesamt im Wesentlichen parallel zu einer Relativbewegungsebene erstreckt.

Die Wälzkörpersätze können auch im Wesentlichen in einer Ebene vorgesehen sein.

Es kann auch nur ein Wälzkörpersatz vorgesehen sein.

Oben hat die Versteifungsstruktur 6 eine Haupterstreckungsrichtung (Linearrichtung), entlang der das Profil extrudiert ist. Jedoch kann die unebene Versteifungsstruktur 6 auch zweidimensional entlang der Relativbewegungsebene vorgesehen sein, wie in Fig. 4. Mehrere Vorsprünge und Vertiefungen, also konvexe und konkave Abschnitte, können isotrop bezüglich der Relativbewegungsebene vorgesehen sein.

Der Käfig kann zwangsgeführt sein. Dazu kann ein Zwangsführungselement, wie ein Zahnrad, mit dem Käfig gekoppelt sein.

Anstatt den Zylinderrollen können beispielsweise Kugeln als Wälzkörper verwendet werden, deren Achsen parallel zur Relativbewegungsebene ausgerichtet sind.

## Patentansprüche

1. Linearführung (1), umfassend:
einen ersten Verschiebekörper (2);
einen zweiten Verschiebekörper (3), der relativ zu dem ersten Verschiebekörper (2) entlang einer Linearrichtung (A) linear beweglich ist;
zumindest einen ersten Wälzkörpersatz (4a), der zwischen dem ersten (2) und zweiten Verschiebekörper (3) vorgesehen ist und der zumindest einen Wälzkörper (41) aufweist, und über den der erste (2) und zweite Verschiebekörper (3) relativ beweglich sind; und
einen Käfig (5), in dem der zumindest eine Wälzkörper (41) in einem Halteabschnitt (52), der in der Linearrichtung (A) mit dem zumindest einen Wälzkörper (41) überlappt, angeordnet ist, **dadurch gekennzeichnet, dass**
der Käfig (5) zumindest eine unebene Versteifungsstruktur (6) aufweist, die zumindest abschnittsweise in dem Halteabschnitt (52) angeordnet ist und zumindest eine Aussparung (62) enthält.

2. Die Linearführung (1) nach Anspruch 1, wobei
die Versteifungsstruktur (6) eine im Wesentlichen einheitliche Wandstärke aufweist.

3. Die Linearführung (1) nach Anspruch 1 oder 2, wobei die Versteifungsstruktur (6) zumindest abschnittsweise zumindest einen konkaven Abschnitt (62, 162) und/oder zumindest eine Vertiefung aufweist,
vorzugsweise jeweils zumindest einen konkaven Abschnitt (62, 162) und/oder eine Vertiefung auf einer Seite des Käfigs (5), die dem ersten Verschiebekörper (2) zugewandt ist, und einer Seite des Käfigs (5), die dem zweiten Verschiebekörper (3) zugewandt ist.

4. Die Linearführung (1) nach zumindest einem der voranstehenden Ansprüche, wobei die Versteifungsstruktur (6) zumindest abschnittsweise zumindest einen konvexen Abschnitt (61, 161) und/oder einen Vorsprung aufweist,
vorzugsweise jeweils zumindest einen konvexen Abschnitt (61, 161) und/oder einen Vorsprung auf einer Seite des Käfigs (5), die dem ersten Verschiebekörper (2) zugewandt ist, und einer Seite des Käfigs (5), die dem zweiten Verschiebekörper (3) zugewandt ist.

5. Die Linearführung (1) nach Anspruch 3, wobei
die Versteifungsstruktur (6) zumindest abschnittsweise zumindest einen konvexen Abschnitt (61, 161) und/oder einen Vorsprung aufweist, vorzugsweise jeweils zumindest einen konvexen Abschnitt (61, 161) und/oder einen Vorsprung auf einer Seite des Käfigs (5), die dem ersten Verschiebekörper (2) zugewandt ist, und einer Seite des Käfigs (5), die dem zweiten Verschiebekörper (3) zugewandt ist, und
wobei zumindest ein konkaver Abschnitt (62) und/oder zumindest eine Vertiefung auf einer Seite des Käfigs (5), die dem ersten Verschiebekörper (2) zugewandt ist, und zumindest ein konvexer Abschnitt (61) und/oder zumindest ein Vorsprung auf einer Seite des Käfigs (5), die dem zweiten Verschiebekörper (3) zugewandt ist, vorgesehen ist, sodass die Versteifungsstruktur eine im Wesentlichen einheitliche Wandstärke aufweist.

6. Die Linearführung (1) nach Anspruch 3, wobei
die Versteifungsstruktur (6) zumindest abschnittsweise zumindest einen konvexen Abschnitt (61, 161) und/oder einen Vorsprung aufweist, vorzugsweise jeweils zumindest einen konvexen Abschnitt (61, 161) und/oder einen Vorsprung auf einer Seite des Käfigs (5), die dem ersten Verschiebekörper (2) zugewandt ist, und einer Seite des Käfigs (5), die dem zweiten Verschiebekörper (3) zugewandt ist, und
wobei der konvexe Abschnitt (61, 161) und/oder der Vorsprung in einer Richtung senkrecht zur Linearrichtung (A), vorzugsweise senkrecht zu einer Relativbewegungsebene (63), zumindest abschnittsweise, insbesondere vollständig, überlappend mit dem konkaven Abschnitt (62, 162) und/oder der Vertiefung ausgebildet ist, insbesondere der Apex des konvexen Abschnitts (61, 161) und/oder des Vorsprungs auf einer Seite des Käfigs (5) in einer Richtung senkrecht zur Relativbewegungsebene (63), überlappend mit dem Apex des konkaven Abschnitts (62, 162) und/oder der Vertiefung auf der anderen Seite des Käfigs (5) ausgebildet ist.

7. Die Linearführung (1) nach zumindest einem der voranstehenden Ansprüche, wobei die Versteifungsstruktur (6) ein entlang einer Haupterstreckungsrichtung (A) extrudiertes Profil aufweist, wobei die Haupterstreckungsrichtung parallel zur Linearrichtung (A) verläuft.

8. Die Linearführung (1) nach zumindest einem der voranstehenden Ansprüche, wobei
die Versteifungsstruktur (6) zumindest abschnittsweise wellenförmig ausgebildet ist.

9. Die Linearführung (1) nach zumindest einem der voranstehenden Ansprüche,
wobei die Versteifungsstruktur (6) zick-zack-förmig ausgebildet ist.

10. Die Linearführung (1) nach zumindest einem der voranstehenden Ansprüche, wobei
die Linearführung (1) einen zweiten Wälzkörpersatz (4b) parallel zum ersten Wälzkörpersatz (4a) entlang der Linearrichtung (A) aufweist,
der erste Wälzkörpersatz (4a) und der zweite Wälzkörpersatz (4b) in dem Käfig (5) angeordnet sind, insbesondere der Käfig (5) entlang der Linearrichtung (A) gesehen im Wesentlichen U-förmig ausgebildet ist.

11. Die Linearführung (1) nach Anspruch 10, wobei
die Versteifungsstruktur (6) zumindest zwischen dem ersten Wälzkörpersatz (4a) und dem zweiten Wälzkörpersatz (4b), insbesondere in zumindest einem von zwei Schenkeln (5b, 5c) der U-Form, angeordnet ist.

12. Die Linearführung (1) nach zumindest einem der voranstehenden Ansprüche, wobei
die Versteifungsstruktur (6) zumindest abschnittsweise durch Umformen, insbesondere Biegen und/oder Tiefziehen, ausgebildet ist.

13. Die Linearführung (1) nach zumindest einem der voranstehenden Ansprüche, wobei der Käfig (5) Metall, insbesondere Stahl umfasst, vorzugsweise davon gebildet wird.

14. Die Linearführung (1) nach zumindest einem der voranstehenden Ansprüche, wobei die Versteifungsstruktur (6) monolithisch ausgebildet ist.

15. Die Linearführung (1) nach zumindest einem der voranstehenden Ansprüche, wobei der erste Verschiebekörper (2) und/oder der zweite Verschiebekörper (3) eine Nut (21, 31) aufweist, in der zumindest der erste Wälzkörpersatz (4a) vorgesehen ist.
